# EUROPEAN PATENT APPLICATION

(11) **EP 4 671 124 A1**
(43) Date of publication of application: **31.12.2025**
(21) Application number: 25184765.3
(22) Date of filing: 24.06.2025
(51) Int. Cl.: B64C 3/56, F16H 25/18

(54) **A MOVEMENT MECHANISM**

(30) Priority: 28.06.2024 TR 2024008342
(71) Applicant: Tusas- Turk Havacilik Ve Uzay Sanayii Anonim Sirketi, 06980 Ankara (TR)
(72) Inventor: Ozturk, Fahrettin, 06980 Ankara (TR); Kaplan, Ahmet, 06980 Ankara (TR); Karaal, Sedat Nezih, 06980 Ankara (TR); Sakaci, Gorkem, 06980 Ankara (TR); Bodur, Rafet, 06980 Ankara (TR); Bora, Hasan, 06980 Ankara (TR); Datli, Furkan, 06980 Ankara (TR)
(74) Representative: Berkkam, Ayfer

(57) **Abstract**

The present invention comprises a body (2), a primary structure (3) disposed on the body (2), a secondary structure (4) disposed on the body (2) so as to be rotatable relative to the primary structure (3), a motion transformer (5) disposed between the primary structure (3) and the secondary structure (4), the motion transformer (5) disposed on the body (2), a first cylindrical portion (510) forming a hollow cylinder form of the motion transformer (5), at least one guide (520) disposed on the inner wall of the first cylindrical portion (510), at least one rotatable part (6) movably disposed in the first cylindrical portion (510), having a length shorter than the length of the first cylindrical portion (510), the rotatable part (6) being disposed on the rotatable part (6), a second cylindrical portion (610) forming the cylindrical form of the rotatable part (6), at least one tracking channel (620) extending in the form of a helical channel indented from the outer wall of the second cylindrical portion (610), in which the guide (520) is located, a first position (I) in which the direction in which the secondary structure (4) extends and the direction in which the primary structure (3) extends are substantially coaxial, relates to a second position (II) in which the rotatable part (6) is rotated, the direction in which the secondary structure (4) extends is different from the direction in which the primary structure (3) extends, and the primary structure (3) is rotated about the axis along which the first cylindrical portion (510) extends.

## Description

The present invention relates to mechanisms for moving winglets on aircraft wings.

The winglets on aircraft wings are located at the tip of the main wing structure and are structural elements used for aerodynamic purposes, particularly to reduce the drag force caused by vortexes at the wingtip. Winglets are usually fixedly attached to the main wing structure, which causes the winglets to be unable to adapt to different flight conditions of the aircraft, resulting in sub-optimal aerodynamic performance and increased fuel consumption. There is a need for an adaptive winglet system that allows the winglets to be positioned at different angles according to the different flight conditions of the aircraft and/or an winglet system that allows the winglets to be adjusted before flight to remain constant throughout the flight at different degrees predetermined by the manufacturer. The system also requires relatively low energy levels and a spatially stable operating performance.

In the United States patent document numbered US3731546, which is included in the state of the art, a power-operated pivot joint is described. The invention relates to a power-operable pivot joint for mounting and actuating a trailing edge winglet or similar parts on an airplane wing, comprising a pair of laterally spaced bearing rings with outwardly projecting support arms adapted to be fixed to the airplane wing, and an annular member mounted pivotably on the wing. An actuator having a set of angularly spaced keys adapted to be connected to the bearing rings and the winglet for movement about the pivot axis, having an outwardly projecting arm, disposed in and fixed to the bearing rings, a set of angularly spaced keys disposed in and fixed to the pivoting member, and a set of angularly spaced guide grooves disposed in and fixed to the bearing rings and the pivoting member and working in conjunction with said keys respectively; one of the sets of keys and the cooperating grooves being helically arranged about the pivot axis in such a way that axial movement of the actuator causes rotational movement. A screw shaft is mounted in the body against the bearings to absorb the axial thrust of the shaft, and the actuator is mounted with threads on the shaft for movement of the actuator during shaft rotation. The outer surface of the actuator is provided with angularly spaced keys and grooves that work together.

The European patent document EP3656491A1, which is included in the state of the art, mentions thermally configurable structural elements useful for aircraft components. In the invention, it is provided that aircraft components such as an airfoil spar can be thermally configured. In this way, the structural element comprises an integrated actuation mechanism provided by at least one thermally configurable region and at least one other thermally configurable region. The system is configured to be integrated into the structural elements in the wing. The thermally configurable regions may comprise shape memory alloy particles and particles formed by an additive manufacturing process such as three-dimensional printing.

In the patent document originating in the United States of America, US7744038B2, which is included in the state of the art, controllable fins are mentioned. In the invention, the body portion comprises at least one of a steerable control surface, a shape memory alloy bending plate and a shape memory alloy torque tube. The base portion is configured to be connected to the wing such that the body portion projects from the wing at an upward angle. In addition to the shape memory alloy bending plates, the invention also provides a shape memory alloy torque tube.

Thanks to a movement mechanism developed with this invention, the angles of the winglets with respect to the body can be changed.

Another object of the invention is to provide a robust movement mechanism having a minimum number of motion transformations.

Another object of the invention is to enable the winglets to remain at an angle with respect to the aircraft predetermined by the manufacturer and/or to enable the winglets to change their angle with respect to the aircraft instantaneously during the flight of the aircraft.

Another object of the invention is to provide a compact and robust motion transmission mechanism which requires low energy consumption for motion triggering.

The movement mechanism defined in the first claim and the claims dependent on this claim, which is realized to achieve the object of the invention, comprises a body. The body is an aircraft chassis. The primary structure is fixed to the body. The secondary structure is rotatably connected to the body with respect to the primary structure. The secondary structure rotates about the beam line direction. The motion transformer is located between the primary structure and the secondary structure and its function is to enable the secondary structure to be rotatably mounting to the primary structure. The first cylindrical portion corresponds to the part of the motion transformer that forms the hollow cylinder. The guide protrudes from the inner wall of the first cylindrical portion corresponding to the hollow part of the hollow cylindrical form. The rotary part is movable inside the first cylindrical portion and has a shorter cylinder length than the first cylindrical portion. The second cylindrical portion forms the cylindrical part of the rotating part. It extends from the cylindrical lateral area of the second cylindrical portion in cylindrical form towards its axis and has a groove to follow the helical form. There is a guide inside the tracking groove. The guide is positioned in the tracking channel as the tracking channel moves between the first position (I) and the second position (II). The guide is fixed, while the tracking channel can move between the first position (I) and the second position (II) on the guide. In the first position (I), the secondary structure and the primary structure extend almost completely through spanwise direction and the secondary structure is positioned at zero degree where it is not triggered. By means of the linear movement of the trigger, the rotating part is rotated from the first position (I) to the second position (II). In the second position (II), there is an angle other than zero degrees between the direction in which the secondary structure extends and the direction in which the primary structure extends from one end to the other end of the wing.

The inventive movement mechanism comprises a trigger. The trigger extends chordwise and is located in a cavity in the first cylindrical portion. The trigger contacts the rotating part through its lateral areas, which are circular in shape. The trigger is linearly deformed so that the rotating part moves in such a way that the guide remains in the tracking groove. The rotating part rotates around the beam line direction.

In one embodiment of the invention, the movement mechanism comprises a plurality of bearing elements rotatably arranged in the hollow inner wall of the first cylindrical portion, to which a trigger is connected, thereby allowing the trigger to rotate simultaneously and at the same angle with the rotating part. The first bearing element is located at one end of the first cylindrical portion on the beam line direction along which the first cylindrical portion extends. The second bearing member is located at the other end of the first cylindrical portion relative to the first bearing member located at one end of the first cylindrical portion on the beam line direction along which the first cylindrical portion extends. The first trigger is connected at one end to the first bearing element and at the other end to the rotating part.

The axial deformation of the trigger causes the rotating part to rotate at the same time as it moves axially. The rotating part is located between the first trigger and the second trigger. The first trigger is located on the right side of the rotating part and the second trigger is located on the left side of the rotating part. One end of the second trigger is connected to the second bearing element and the other end to the rotating part. The second trigger and the first trigger exert linear force in the same direction but in opposite directions. The combined linear force obtained from the first trigger and the second trigger is applied to the rotating part, and the rotation of the rotating part and the rotation of the secondary structure is ensured by being connected to the secondary structure. Thus, the number of degrees of rotation of the secondary structure in radians is provided by the first trigger and the second trigger, which are located independently on both sides of the rotating part. In order to keep the secondary structure stationary in the second position (II), the upward reverse moment required against the downward rotational moment effect due to the weight of the secondary structure is obtained by the linear force application of the second trigger.

In one embodiment of the invention, the movement mechanism comprises a trigger made of a shape memory alloy material.

In one embodiment of the invention, the movement mechanism comprises a trigger which is deformed by heat. When the trigger is in the first position (I), heat is applied by the user to cause the trigger to deform linearly. In this way, the linear and rotary motion of the rotating part is transformed so that only the rotary motion in the secondary structure will be rotary.

In one embodiment of the invention, the movement mechanism comprises a trigger located between the rotating part and the bearing element. The trigger extends along the beam line. There are plurality of triggers positioned so as to sweep an equal radius from the center point, with the center point located at any point on the direction passing through the beam line direction of the rotating part.

In one embodiment of the invention, the movement mechanism comprises a trigger extending in the form of a helix. The trigger is arranged as a spring of the helical spring type. In this way, the effect caused by the deformation of the shape memory alloy material is improved together with the spring's ability to stretch.

In one embodiment of the invention, the movement mechanism comprises an outer ring on the bearing member, which is located on the inner wall of the first cylindrical portion, which is the cavity portion. The bearing member comprises an inner ring rotatably rotatable about its axis within the outer ring. One end of the trigger is connected to the rotating part and the other end to the inner ring, so that both ends of the trigger rotate freely during the linear deforming movement of the trigger. One or both of the outer ring and the inner ring may remain stationary or move according to the requirements of the elements connected to their ends.

In one embodiment of the invention, the movement mechanism comprises a body, which is the chassis of the aircraft. The primary structure is a fixed wing structure. The main part of the primary structure is a part located on the primary structure and is the main wing structure. The primary structure duct is the cavity located on the primary structure main section, extending along the chord line. The secondary structure is the aerodynamically shaped winglet located at the outer end of the primary structure. The main part of the secondary structure is the part on the secondary structure that forms the winglet structure. The secondary structure channel is the groove on the main part of the secondary structure, running along the beam line. The fixing beam is located on the motion transformer, profiled in the cross-sectional area predetermined by the manufacturer. One end of the fixing beam is connected to the first cylindrical portion and the other end is connected to the primary structure channel and ensures that the motion transformer is fixed to the primary structure. The primary structure and the secondary structure extend from one end of the wing to the other end in the first position (I). In the first position (I), the primary structure, the secondary structure and the motion transformer have smooth outer surface transitions that ensure aerodynamic continuity. The motion transformer beam is connected at one end to the first cylindrical portion and at the other end to the channel of the secondary structure, so that the linear and rotary motion of the rotating part is transmitted to the secondary structure only as rotary motion and the linear motion is compensated.

In an embodiment of the invention, the movement mechanism comprises a first cylindrical portion having a partially hollow cylindrical form, extending around a circle predetermined by the manufacturer from zero to three hundred and sixty degrees, scanning an angle of less than three hundred and sixty degrees, forming a dashed circle in the radial direction. The hollow inner wall of the first cylindrical portion is provided with an outer ring rotatable about its axis. There is a support beam in profile in a cross-sectional area predetermined by the manufacturer, connected at one end to the outer ring and at the other end to the main part of the secondary structure, which transfers the weight of the secondary structure to the primary structure. The support beam is in contact with the outer ring and rotates simultaneously and at the same angle with the outer ring. The first stop is located on the first cylindrical portion as the wall forming the wall thickness corresponding to the cavity part on the first cylindrical portion, with the angle value corresponding to the secondary structure in radians in the first position (I) and having a value between zero and three hundred and sixty degrees. The second stop is provided as a wall forming the wall thickness corresponding to the cavity portion above the first cylindrical portion, such that the secondary structure corresponds in radians to the second position (II) and has an angle value between zero and three hundred and sixty degrees. In an embodiment of the invention, the movement mechanism comprises a guide channel. The cross-sectional area of the tracking channel is in a form conjugate to the cross-sectional area of the guide.

In one embodiment of the invention, the movement mechanism comprises a guide. The guide has a rectangular cross-sectional area with corner points of curved geometry.

In one embodiment of the invention, the movement mechanism comprises a trigger. The trigger may be a hydraulic piston or a pneumatic piston, which may extend and shorten in the direction along which it extends.

The movement mechanism for achieving the object of the present invention is shown in the accompanying figures;
Figure 1 - Perspective view of the movement mechanism.
Figure 2 - Perspective view of motion transformer, first cylindrical portion, guide, rotating part, second cylindrical portion, tracking channel, trigger and bearing element.
Figure 3 - Perspective view of motion transformer, first cylindrical portion, guide, trigger and bearing element.
Figure 4 - Perspective view of the secondary structure, secondary structure main part, secondary structure channel, motion transformer beam and support beam.
Figure 5 - Perspective view of the primary structure main part, primary structure channel, first stopper and second stopper in first position (I).
Figure 6 - Perspective view of the main part of the primary structure, primary structure channel, first stopper and second stopper in the second position (II).

The parts in the figures are numbered one by one and the corresponding numbers are given below.
1. Movement mechanism
2. Body
3. Primary structure
   310. Primary structure main part
   320. Primary structure channel
4. Secondary structure
   410. Secondary structure main part
   420. Secondary structure channel
   430. Motion transfer beam
   440. Support beam
5. Motion transformer
   510. First cylindrical portion
   520. Guide
   530. Fixing beam
   540. First stopper
   550. Second stopper
6. Rotatable part
   610. Second cylindrical portion
   620. Tracking channel
7. Trigger
   710. First trigger
   720. Second trigger
8. Bearing element
   810. First bearing element
   820. Second bearing element
   830. Outer ring
   840. Inner ring
(I) First position
(II) Second position

The movement mechanism (1) comprises a body (2), a primary structure (3) arranged on the body (2), a secondary structure (4) arranged on the body (2) rotatably relative to the primary structure (3), a motion transformer (5) arranged between the primary structure (3) and the secondary structure (4), the motion transformer (5) arranged on the motion transformer (5), a first cylindrical portion (510) forming a hollow cylinder of the motion transformer (5), at least one guide (520) disposed on an inner wall of the first cylindrical portion (510), at least one rotatable part (6) movably disposed in the first cylindrical portion (510), the rotatable part (6) having a length shorter than the length of the first cylindrical portion (510), the rotatable part (6) being disposed on the rotatable part (6), a second cylindrical portion (610) forming the cylindrical form of the rotatable part (6), at least one tracking channel (620) extending in the form of a helical channel indented from the outer wall of the second cylindrical portion (610), in which the guide (520) is located, a first position (I) in which the direction in which the secondary structure (4) extends and the direction in which the primary structure (3) extends are substantially coaxial, A second position (II) in which the rotatable part (6) is rotated, wherein the direction in which the secondary structure (4) extends and the direction in which the primary structure (3) extends are different, and wherein the primary structure (3) is rotated about the axis along which the first cylindrical portion (510) extends.

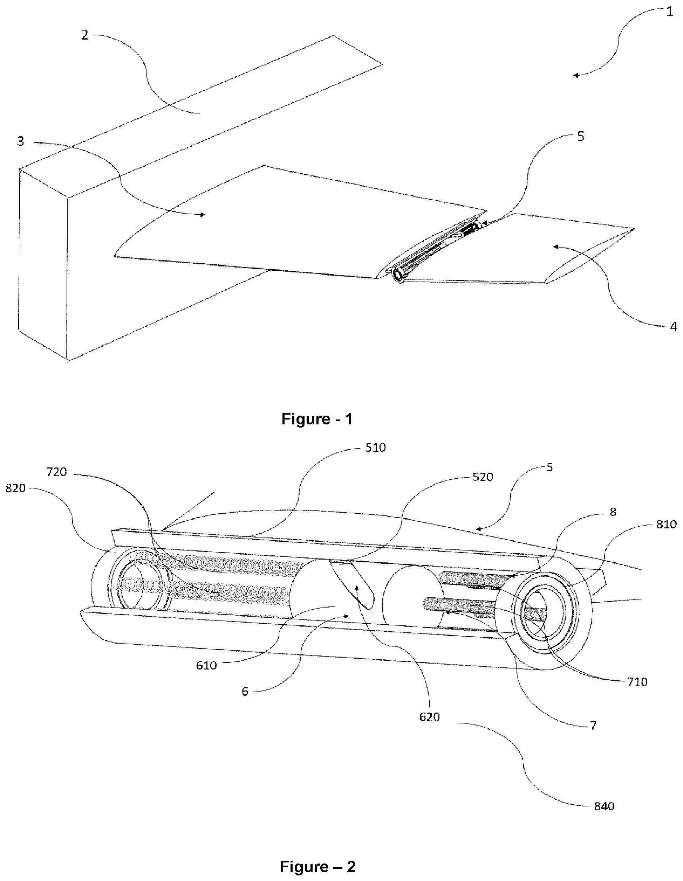

The inventive movement mechanism (1) extends in the direction in which the first cylindrical portion (510) extends along the length of the first cylindrical portion (510), contacts the rotatable part (6) in the first cylindrical portion (510) at its outer periphery, and moves linearly to cause the tracking channel (620) to move on the guide (520), the rotatable part (6) comprising at least one trigger (7) thereby enabling the rotatable part (6) to rotate about the direction along which it extends, the rotatable part (6) enabling the secondary structure (4) to be moved from the first position (I) to the second position (II) and/or from the second position (II) to the first position (I) by means of the trigger (7). The primary structure (3) is fixed on the body (2), while the secondary structure (4) is movable relative to the body (2). The helix-shaped channel of the guide (520) and tracking channel (620) limits the degree of freedom and mobility of the rotatable part (6), and the linear movement of the rotatable part (6) enables the rotatable part (6) to perform both linear and rotary movements. The axial component of the helical channel of the guide (520) ensures that the linear movement is maintained, while the radial component ensures that the linear movement is also transformed into radial movement. The guide (520) preferably extends along the beam line, which is the direction along which the first cylindrical portion (510) extends (Figure 1, Figure 2, Figure 3).

The trigger (7) allows the rotatable part (6) to be moved. The trigger (7) contacts the rotatable part (6) through the circular lateral field surfaces, which are the base fields of the first cylindrical portion (510), so that the rotatable part (6) moves linearly only by linear movement of the trigger (7). The rotatable part (6) rotates around its own axis. The axis of the rotatable part (6) preferably also coincides with the axis of the beam line. The trigger (7) deforms linearly about its own axis. The axis of the trigger (7) preferably coincides with the beam line axis. The motion transformation is only from linear to rotary motion, and there is no need for rotary, linear and rotary motion transformation respectively. The motion transformation is performed with minimum transformation, so that the motion transformation is in a more robust design. The use of the trigger (7) to move only linearly makes it possible to use alloy material with shape memory. In addition, there is no need to use an extra rotary actuator type actuator as trigger (7). Keeping the number of motion transformations to a minimum allows the secondary structure (4) to be quickly moved from the first position (I) to the second position (II) (Figure 1, Figure 2, Figure 3).

In one embodiment of the invention, the movement mechanism (1) comprises a first cylindrical portion (510) rotatably arranged on the inner wall of the first cylindrical portion (510), to which a trigger (7) is connected, and a plurality of bearing elements (8) which allow the trigger (7) to rotate in conjugation with the rotatable part (6), a first bearing element (810) disposed at one end of the first cylindrical portion (510) along the direction along which the first cylindrical portion (510) extends, a second bearing element (820) disposed at a further end of the first cylindrical portion (510) along the direction along which the first cylindrical portion (510) extends, one end of the first bearing element (810), a first trigger (710), one end of which is connected to the second bearing element (820), the other end of which is connected to the rotatable part (6), which linearly moves the rotatable part (6), opposite the first trigger (710), one end of which is connected to the second bearing element (820), the other end of which is connected to the rotatable part (6), the first trigger (710) and a second trigger (720) which provides bilateral control of the amount of rotation of the secondary structure (4) by applying a linear force in opposite directions to the rotatable part (6), and which provides the moment required to keep the secondary structure (4) in the second position (II) against the moment effect due to its weight by applying a linear force. The first bearing element (810) and the second bearing element (820) are each located at two end points of the first cylindrical portion (510). Due to the rotation of the rotatable part (6) and the bearing element (8) at the two ends of the trigger (7), the trigger (7) is not subjected to any torsional force. The rotatable part (6) is located between the first trigger (710) and the second trigger (720). In this way, the deformation of the first trigger (710) and the second trigger (720) ensures that forces are applied to the rotatable part (6) in opposite directions. In order for the rotatable part (6) to remain stationary between the first position (I) and the second position (II), it ensures that the compound linear force required to prevent rotation of the secondary structure (4) is applied. The use of two separate groups of triggers (7), the first trigger (710) and the second trigger (720), in opposite directions, allows the user to have more manipulation over the movement of the rotatable part (6) (Figure - 2, Figure - 3).

In one embodiment of the invention, the movement mechanism (1) comprises triggers (7) made of shape memory alloy material, which enable the secondary structure (4) to be moved from first position (I) to second position (II) and/or from second position (II) to first position (I). The fact that the trigger (7) is preferably made of a shape memory alloy material enables the trigger (7) to be triggered by heat, keeping the space requirement for the trigger (7) at low levels and enabling the trigger (7) to operate with relatively low amounts of energy. The heat requirement of the trigger (7) can be provided through the use of a heat storage accumulator. The aforementioned accumulator allows the use of extra heat energy sources at low capacities by utilizing the heat energy obtained from the frictionally heated aerodynamic surfaces of the aircraft by using the heat exchanger. The trigger (7) can be made of piezoelectric material predetermined by the manufacturer and the trigger (7) can be deformed by applying voltage (Figure - 2, Figure - 3).

In one embodiment of the invention, the movement mechanism (1) comprises a second position (II) in which the trigger (7) extends from the first position (I) by linear movement as a result of exposure to heat, whereby the tracking channel (620) rotates the rotatable part (6) and the secondary structure (4) on the guide (520). When the trigger (7) is in the second position (II), it is brought back to the first position (I) by removing the exposed heat. The linear movement of the trigger (7) causes the rotatable part (6) to rotate around its axis, so that the secondary structure (4) connected to the rotatable part (6) rotates relative to the primary structure (3). Heat energy is used as the energy source of the trigger (7), and the heat energy causes stress to occur within the shape memory alloy material and allows the trigger (7) to deform (Figure - 2, Figure - 3, Figure - 5, Figure - 6).

In one embodiment of the invention, the movement mechanism (1) comprises triggers (7) extending along the length between the rotatable part (6) and the bearing element (8), which are located in such a way that equal radial angle intervals remain between each other around the direction in which the rotatable part (6) extends along the length. The triggers (7) are positioned such that the axis along which the rotatable part (6) extends is a virtual circle center and the triggers (7) are located at equal radius distances from the virtual circle center. In this way, the triggers (7) provide almost homogeneous force application to the rotatable part (6), and the amount of linear force required for the rotational movement of the rotatable part (6), which each trigger (7) must apply, is shared among the triggers (7) (Figure - 2, Figure - 3).

In one embodiment of the invention, the movement mechanism (1) comprises a trigger (7) which is a helical spring in the form of a helix, thereby increasing the elongation of the shape memory alloy material. The fact that the trigger (7) is a helical coil spring allows the trigger (7) to be further deformed by the effect of the geometric form of the trigger (7), in addition to the deformability of the trigger (7) due to the selection of shape memory alloy material. At the same time, a damping effect is realized thanks to the flexible structure of the trigger (7) to contribute to keeping the rotatable part (6) stationary between the first position (I) and/or the second position (II) (Figure - 2, Figure - 3).

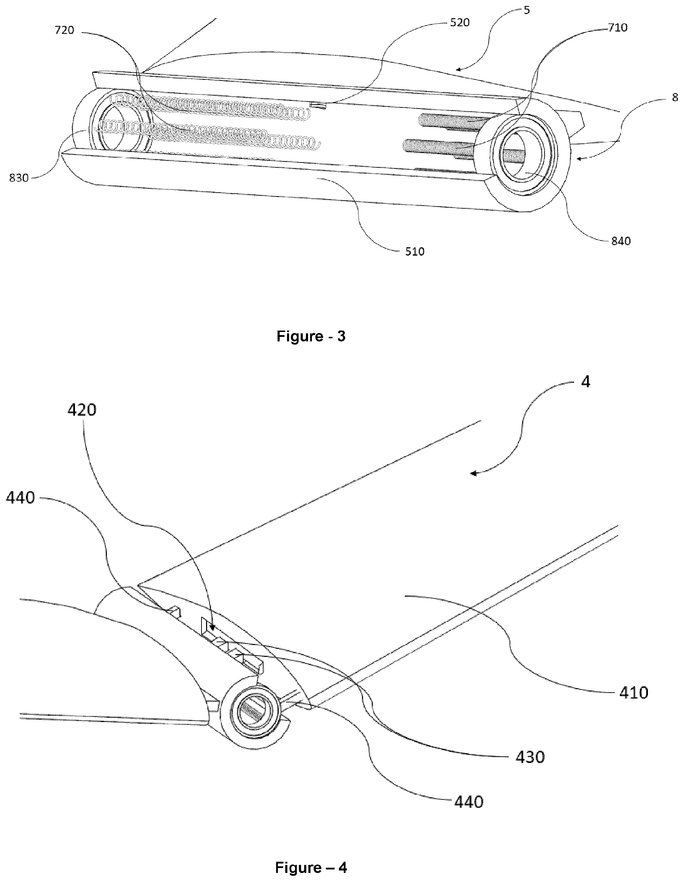

In one embodiment of the invention, the movement mechanism (1) comprises an outer ring (830) located on the inner wall of the first cylindrical portion (510) on the bearing element (8), an inner ring (840) rotatably located in the outer ring (830) on the bearing element (8), a trigger (7), one end of which is connected to the rotatable part (6) and the other end of which is connected to the inner ring (840), thus realizing the linear movement by rotation. The inner ring (840) can rotate freely. As one end of the trigger (7) is connected to the rotatable part (6) and the other end to the freely rotatable inner ring (840), the two ends of the trigger (7) rotate the same amount with each other, so that the trigger (7) is not subjected to torsional load and is exposed to relatively low stress values. The outer ring (830) rotates at the same angle simultaneously with the rotation angle of the secondary structure (4) in the second position (II) (Figure 2, Figure 3).

In an embodiment of the invention, the movement mechanism (1) comprises an body (2), a primary structure (3) having an aerodynamic form, at least one primary structure main part (310) forming a main wing structure disposed on the primary structure (3), at least one primary structure channel (320) disposed on the primary structure main part (310) having a recess extending longitudinally along the chord line, secondary structure (4) of aerodynamic form, located at the end part of the primary structure (3), at least one secondary structure main part (410) of the secondary structure forming the winglet structure, located on the secondary structure (4), at least one channel (420) of the secondary structure, located on the secondary structure main part (410) of the secondary structure, having a longitudinal recess along the chord line, having a profile of a cross section predetermined by the manufacturer, at least one fixing beam (530) located on the motion transformer (5), partly on the first cylindrical portion (510) and partly on the primary structure channel (320), for fixing the motion transformer (5) to the primary structure (3), wherein the direction in which the primary structure (3) extends and the direction in which the secondary structure (4) extends are coaxial, the primary structure (3), The first position (I) in which the aerodynamic continuity of the secondary structure (4) and the motion transformer (5) is ensured comprises at least one motion transfer beam (430), one end of which is connected to the first cylindrical portion (510) and the other end to the secondary structure channel (420), so that the linear and rotary motion of the rotatable part (6) is transmitted to the secondary structure (4) as rotary motion only. The primary structure (3) is a wing of an aircraft. The main part of the secondary structure (410) is an aerodynamically turbulence-preventing winglet. In the first position (I), the secondary structure (4) is parallel to the primary structure (3). In the second position (II), the secondary structure (4) is triggered relative to the primary structure (3) and rotated relative to the primary structure (3). The cross-sectional area dimensions determined by the manufacturer are pre-measured by the manufacturer by making the necessary strength calculations. In the first position (I), the air flow passes over the primary structure (3) and the secondary structure (4) in such a way that the aerodynamically continuous form produces almost identical aerodynamic effects. The motion transfer beam (430) can move linearly in the secondary structure channel (420), so that the rotary motion of the rotatable part (6) is transmitted to the secondary structure (4) only as rotary motion and the linear motion is compensated. The motion transformer (5) extends along the beam line. The first cylindrical portion (510) and the rotatable part (6) extend along the beam line. The support beam (440) and the fixing beam (530) extend from one end of the wing to the other (Figure - 2, Figure - 4, Figure - 5).

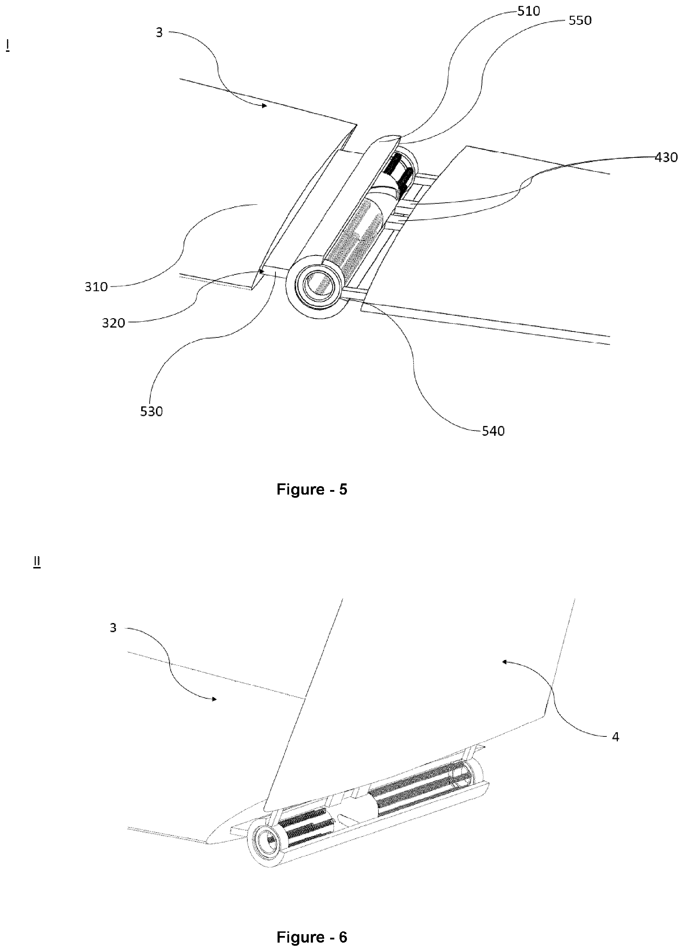

In one embodiment of the invention, the movement mechanism (1) comprises a first cylindrical portion (510) that is at least partially cylindrical in form to scan a radial angle predetermined by the manufacturer; an outer ring (830) rotatably arranged on the inner wall of the first cylindrical portion (510); at least one support beam (440) having a profile in a cross-section predetermined by the manufacturer, with one end connected to the outer ring (830) and the other end connected to the secondary structure main part (410) of the secondary structure (4), configured to transfer the weight of the secondary structure (4) to the primary structure (3) and rotating in conjunction with the outer ring (830); a first stopper (540) located on the first cylindrical portion (510), forming a wall at the angle of the first position (I), thereby limiting the primary structure (3) in the first position (I); and a second stopper (550) located on the first cylindrical portion (510), spaced apart from the first stopper (540) and forming a wall at the angle of the second position (II), thereby limiting the primary structure (3) in the second position (II). The range of rotation angles of the secondary structure (4) predetermined by the manufacturer affects the radial angle swept by the first cylindrical portion (510) predetermined by the manufacturer. The sum of the rotation angle range of the secondary structure (4) and the radial angle swept by the first cylindrical portion (510) is preferably three hundred and sixty degrees. Preferably, when the rotation angle range of the secondary structure (4) predetermined by the manufacturer is ninety degrees, the radial angle scanned by the first cylindrical portion (510) predetermined by the manufacturer is two hundred and seventy degrees. The radial angle between the first stopper (540) and the second stopper (550) corresponds to the radial angle scanned by the first cylindrical portion (510). By radial angle it is meant that angles between zero and three hundred and sixty degrees in the direction encircling the circular form, which are the lateral base areas of the cylindrical form. The first stopper (540) and the second stopper (550) have a thicker wall, which acts as a stopper by means of contact with the motion transfer beam (430) and the support beam (440) (Figure 5).

In one embodiment of the invention, the movement mechanism (1) comprises a tracking channel (620) having a channel cross-sectional area in conformity with the guide (520). The tracking channel (620) almost encircles the guide (520). The form-fitting geometry of the follower channel 620 with the guide 520 ensures that the force transmission between the tracking channel (620) and the guide (520) is almost homogeneous on almost all surfaces, so that the stress values during force transmission are relatively low (Figure - 3).

In one embodiment of the invention, the movement mechanism (1) comprises a guide (520) having a rectangular cross-section with radius corners. The cross-sectional area of the guide (520) has a rectangular shape. The corner points of the cross-sectional area of the guide (520) have a radiused shape, thereby contributing to a continuous and smooth overall movement, while at the same time ensuring that the stress values remain relatively low during the force transmission between the guide (520) and the tracking channel (620) (Figure - 3).

In one embodiment of the invention, the movement mechanism (1) comprises a linearly moving trigger (7), which is a hydraulic or pneumatic piston. The use of a hydraulic or pneumatic piston as the trigger (7) can be used for aircraft applications of different sizes and weights. Hydraulic actuators can be used especially in applications where high forces are required (Figure - 3).

## Claims

1. A movement mechanism **comprising** a body (2), a primary structure (3) located on the body (2), a secondary structure (4) rotatably arranged on the body (2) relative to the primary structure (3), a motion transformer (5) located between the primary structure (3) and the secondary structure (4), a first cylindrical portion (510) on the motion transformer (5), forming a hollow cylinder of the motion transformer (5), at least one guide (520) disposed on the inner wall of the first cylindrical portion (510), at least one rotatable part (6) movably disposed in the first cylindrical portion (510), having a length shorter than the length of the first cylindrical portion (510), a second cylindrical portion (610) disposed on the rotatable part (6), forming the cylindrical form of the rotatable part (6), at least one tracking channel (620) extending in the form of a helical channel recessed from the outer wall of the second cylindrical portion (610), in which the guide (520) is located, a first position (I) in which the direction along which the secondary structure (4) extends and the direction along which the primary structure (3) extends are almost exactly coincident, a second position (II) in which the rotatable part (6) is rotated, with the direction in which the secondary structure (4) extends is different from the direction in which the primary structure (3) extends, and the primary structure (3) is rotated about the axis along which the first cylindrical portion (510) extends **characterized by** at least one trigger (7) located in the first cylindrical portion (510) so as to extend in the direction along which the first cylindrical portion (510) extends, contacting the rotatable part (6) at its outer wall, allowing the linearly moving tracking channel (620) to move on the guide (520), thereby allowing the rotatable part (6) to rotate about the direction along which it extends, a rotatable part (6) which, by means of a trigger (7), allows the secondary structure (4) to be moved from the first position (I) to the second position (II) and/or from the second position (II) to the first position (I).

2. A movement mechanism (1) according to claim 1, **characterized by** a plurality of bearing elements (8) rotatably arranged on the inner wall of the first cylindrical portion (510), to which a trigger (7) is connected, thereby allowing the trigger (7) to rotate in conjugation with the rotatable part (6), a first bearing element (810) disposed at an end of the first cylindrical portion (510) along the direction along which the first cylindrical portion (510) extends, a second bearing element (820) located at a further end of the first cylindrical portion (510) along the direction along which the first cylindrical portion (510) extends, a first trigger (710), one end connected to the first bearing element (810) and the other end connected to the rotatable part (6), linearly moving the rotatable part (6), a second trigger (720) opposed to the first trigger (710), one end of which is connected to the second bearing element (820), the other end of which is connected to the rotating part (6), which provides bilateral control of the amount of rotation of the secondary structure (4) by applying linear force in opposite directions with the first trigger (710) to the rotating part (6), which provides the required moment against the moment effect caused by its weight to keep the secondary structure (4) fixed in the second position (II) by applying linear force.

3. A movement mechanism (1) according to claim 1 or 2, **characterized by** the trigger (7) being made of a shape memory alloy material, whereby the secondary structure (4) is moved from the first position (I) to the second position (II) and/or from the second position (II) to the first position (I).

4. A movement mechanism (1) according to any one of the preceding claims, **characterized by** the second position (II), in which the trigger (7) extends from the first position (I) by linear movement as a result of exposure to heat, whereby the tracking channel (620) rotates and moves the rotating part (6) and the secondary structure (4) on the guide (520).

5. A movement mechanism (1) according to claim 2 to claim 4, **characterized by** triggers (7) extending in length between the rotatable part (6) and the bearing element (8), which are arranged around the direction in which the rotatable part (6) extends in length, with equal radial angle intervals between them.

6. A movement mechanism (1) according to any one of the preceding claims, **characterized by** the trigger (7) being a helical spring, thereby increasing the elongation of the shape memory alloy material.

7. A movement mechanism (1) according to any one of claims 2 to 6, **characterized by** an outer ring (830) on the bearing member (8), which is located on the inner wall of the first cylindrical portion (510), an inner ring (840) rotatably located in the outer ring (830), which is located on the bearing member (8), the trigger (7), one end of which is connected to the rotatable part (6) and the other end of which is connected to the inner ring (840), thereby performing the linear movement rotationally.

8. A movement mechanism (1) according to any one of the preceding claims, **characterized by** the body (2) being the chassis of an aircraft, the primary structure (3) having an aerodynamic form, at least one primary structure main portion (310) forming the main wing structure, located on the primary structure (3), at least one primary structure duct (320), located on the primary structure main portion (310), having a recess extending along the chord line, located at the end of the primary structure (3), the secondary structure (4) having an aerodynamic form, at least one secondary structure main part (410) forming the aileron structure, located on the secondary structure (4), at least one secondary structure channel (420), located on the secondary structure main part (410), having a recess extending longitudinally along the beam line, having a profile of a cross-section predetermined by the manufacturer, located on the motion transformer (5), at least one fixing beam (530), partly located on the first cylindrical portion (510) and partly located on the primary structure channel (320), for fixing the motion transformer (5) to the primary structure (3), wherein the direction in which the primary structure (3) extends and the direction in which the secondary structure (4) extends are coaxial, the primary structure (3), the first position (I) at which the aerodynamic continuity of the secondary structure (4) and the motion transformer (5) is ensured, at least one motion transmission beam (430) connected at one end to the first cylindrical portion (510) and at the other end to the secondary structure channel (420), so that the linear and rotary motion of the rotating part (6) is transmitted to the secondary structure (4) only as rotary motion.

9. A movement mechanism (1) according to claim 8, **characterized by** the first cylindrical portion (510) having at least a partially cylindrical shape so as to scan a radial angle predetermined by the manufacturer, outer ring (830) rotatably disposed on the inner wall of the first cylindrical portion (510), at least one support beam (440) with a profile of a cross-section predetermined by the manufacturer, connected at one end to the outer ring (830) and at the other end to the main part of the secondary structure main part (410), allowing the weight of the secondary structure (4) to be transferred to the primary structure (3), rotating conjugally with the outer ring (830), a first stopper (540) disposed on the first cylindrical portion (510), which is a wall at an angle in the first position (I), whereby the primary structure (3) is limited in the first position (I), a second stopper (550) located on the first cylindrical portion (510), spaced apart from the first stopper (540), which is a wall at an angle in the second position (II), thereby limiting the primary structure (3) in the second position (II).

10. A movement mechanism (1) according to any one of the preceding claims, **characterized by** the tracking channel (620) having a channel cross-sectional area that is form-compatible with the guide (520).

11. A movement mechanism (1) according to any one of the preceding claims, **characterized by** the guide (520) having a rectangular cross-section with radius corners.

12. A movement mechanism (1) according to any one of the preceding claims, **characterized by** the trigger (7) being a linearly moving hydraulic or pneumatic piston.
